# EUROPÄISCHE PATENTANMELDUNG

(11) **EP 1 320 141 A2**
(43) Veröffentlichungstag der Anmeldung: **18.06.2003**
(21) Anmeldenummer: 02014911.8
(22) Anmeldetag: 05.07.2002
(51) Int. Cl.: H01M 8/02

(54) **Verfahren zur Herstellung von Verteilerplatten**

(30) Priorität: 13.12.2001 DE 10161245
(71) Anmelder: Carl Freudenberg KG, 69469 Weinheim (DE)
(72) Erfinder: Schilling, Hermann, Dr., 69469 Weinheim (DE); Pflästerer, Jens, 69509 Mörlenbach/Weiher (DE)

(57) **Zusammenfassung**

Verfahren zur Herstellung von Verteilerplatten, insbesondere von Verteilerplatten für elektrochemische Brennstoffzellen mit einem Fluid-Führungssystem aus Verteilerräumen und/oder Kanälen für Reaktions- und/oder Kühlmedien und mit einer rahmenförmigen elastischen Abdichtung, wobei die Wände (5) der Verteilerräume (2) und/oder der Kanäle (3) des Fluid-Führungssystems durch direktes Auftragen eines geeigneten Materials auf eine eben ausgebildete Basisplatte (6) aus Graphit oder Composit-Graphit oder Blech hergestellt sind.

## Beschreibung

### Technisches Gebiet

Die Erfindung befasst sich mit der Herstellung von Verteilerplatten, insbesondere von Verteilerplatten für elektrochemische Brennstoffzellen mit einem Fluid-Führungssystem aus Verteilerräumen und/oder Kanälen für Reaktion- und/oder Kühlmedien und mit elastischen Abdichtungen.

Die elektrochemischen Brennstoffzellen haben in den letzten Jahren erheblich an Bedeutung gewonnen und es besteht die Forderung, nach einer möglichst kostengünstigen Herstellung der für die Zellen benötigten Verteilerplatten. Die Verteilerplatten sollen mit einem sicheren Fluid-Führungssystem versehen sein, in dem die flüssigen oder auch gasförmigen Medien geführt werden. Außerdem sollen sie mit einer zuverlässigen Abdichtung ausgestattet sein, welche verhindert, dass die eingesetzten Medien nach außen dringen können. Für die Herstellung von Verteilerplatten sind zwei prinzipielle Verfahren bekannt. Das erste Verfahren beruht darauf, dass in eine ebene Grundplatte aus Elektrographit Kanäle für die Fluid-Führung eingefräst werden. Dieses Verfahren hat den Nachteil, dass das Einfräsen der Kanäle sehr aufwendig ist und großtechnisch wirtschaftlich nicht realisierbar ist. Bei dem zweiten Verfahren werden die Kanäle in Composit-Graphitplatten eingeprägt. Beim Einprägen der Kanäle besteht eine hohe Bruchgefahr für das spröde Graphitmaterial, was einer großtechnischen Herstellung im Wege steht. Angewendet werden auch an einer Grundplatte beide Verfahren gleichzeitig, d.h. einzelne Kanäle werden geprägt, während andere eingefräst werden bzw. geprägte Kanäle werden nachgefräst. Auch diese Möglichkeit ist mit hohen Kosten verbunden.

Möglich ist auch die Verwendung von Blechplatten mit eingepresstem Fluid-Führungssystem. Dabei entsteht jedoch das Problem, das bei der Blechumformung eine gegenläufige Struktur entsteht, d.h. einer Vertiefung auf der einen Seite des Blechs entspricht eine Erhebung auf der anderen Seite. Dadurch ist es nicht möglich, die Fluid-Führungssysteme auf beiden Seiten der Verteilerplatte unabhängig voneinander zu gestalten.

### Stand der Technik

Die DE 195 42 475 A1 zeigt Verteilerplatten, die mit Fluid-Kanälen versehen sind und die eine integrierte Dichtung haben. Die Dichtung bildet mit der Verteilerplatte ein integriertes Bestandteil. Eine solche Lösung ist jedoch nur möglich, wenn das für die Verteilerplatte verwendete Material in sehr hohem Maße verpressbar ist. Die Herstellung solcher Verteilerplatten wird durch die vorgegebenen Materialeigenschaften folglich stark eingeschränkt.

Eine interessante Lösung für die Herstellung von Verteilerplatten ist in der EP 0 956 604 behandelt. Dort wird eine aus Aluminium bestehende Basis-Verteilerplatte mit Vorsprüngen eines schmelzbaren Polymers versehen, wobei die Vorsprünge und die von den Vorsprüngen nicht abgedeckten Teile der Verteilerplatte mit einem Metall, einem Metallnitrit oder Metallcarbit überzogen werden. Dadurch soll ein hoher Widerstand gegen die korrosiven Elektrolyte erreicht werden. Gleichzeitig wird eine einfache Herstellung, eine einfache Struktur und geringe Herstellungskosten angestrebt. Die vorgegebene Zielsetzung ist jedoch nur bedingt erreichbar, da der Metallüberzug nur schwierig in gleichmäßiger Form herstellbar ist.

### Darstellung der Erfindung

Der Erfindung liegt die Aufgabe zugrunde ein weiter verbessertes Verfahren zur Herstellung von Verteilerplatten zu schaffen, bei dem das Fluid-Führungssystem einfach herstellbar und auf beiden Seiten der Verteilerplatte unabhängig voneinander ausgeführt werden kann. Die Kanäle für die Gasführung als auch die Kanäle für die Flüssigkeitsführung sollen in beliebiger Form auf die Verteilerplatte aufgebracht werden können. Das Verfahren soll möglichst einfach sein, so dass es für die großtechnische Produktion von Verteilerplatten brauchbar ist.

Die Lösung der gestellten Aufgabe erfolgt bei einem Verfahren der eingangs genannten Art erfindungsgemäß dadurch, dass die Wände der Verteilerräume und/oder Kanäle des Fluid-Führungssystems durch direktes Auftragen eines geeigneten Materials auf eine im Wesentlichen eben ausgebildete Basisplatte aus Graphit oder Composit-Graphit oder Metallblech oder Kunststoff-Folie hergestellt sind. Die von den Wänden und/oder Abdichtung bedeckte Fläche der Verteilerplatte wird vor dem Aufbringen des Wand- bzw. Abdichtungsmaterials mit einem Binder beschichtet oder das Wand- bzw. Dichtungsmaterial ist selbsthaftend oder enthält einen Binder. Es zeigte sich, dass mit den vorgegebenen Maßnahmen sehr gute Ergebnisse erreicht werden. Die Verwendung von relativ spröden Graphitplatten als Basisplatten kann bestehen bleiben und die Ausbildung der Verteilerräume und Kanäle wird in einfachster Weise durch direktes Auftragen eines geeigneten Materials auf die Basisplatte erreicht. Geeignete Materialien sind in erster Linie Polymere, die eine gute Haftung zur Basisplatte ergeben und widerstandsfähig gegen die eingesetzten Fluide sind. Geeignete Polymere sind FKM, EPDM, Silikone, NBR oder Epoxyharze. Um die Verbindung der Polymere zur Basisplatte zu verstärken, wird vor dem Aufbringen des Wand- bzw. Dichtungsmaterials die von der Wand bzw. dem Dichtungsmaterial bedeckte Fläche mit einem Binder beschichtet. Geeignete Binder hierfür sind herkömmliche Bindemittel, die für Gummi-Metall-Verbindungen eingesetzt werden.

Möglich ist auch die Verbindung zwischen dem Wand- bzw. Dichtungsmaterial und der Basisplatte durch Adhäsion zu verstärken. Hierfür kann das Wand bzw. Dichtungsmaterial mit einem geeigneten Bindematerial versehen sein, welches die Adhäsion zur Basisplatte unterstützt.

Die Polymermaterialien für die Verteilerräume und/oder Kanäle des Fluid-Führungssystems werden in flüssiger Form auf die ebenen Basisplatten aufgetragen und anschließend ausgehärtet. Die Aushärtung kann bei erhöhten Temperaturen erfolgen. Für die Brennstoffzellen-Anwendungen ist es wesentlich, dass das verwendete Polymermaterial ein elektrisch leitfähiges Material ist. Es kann beispielsweise ein Material sein, dass als eine elektrisch leitfähige Paste vorliegt, die nach ihrem Auftrag auf die Basisplatte ausgehärtet wird.

Besonders vorteilhaft ist, wenn die elastische Abdichtung aus dem gleichen Material wie für die Wände der Verteilerräume und Kanäle hergestellt ist. Hierdurch kann das Herstellungsverfahren erheblich vereinfacht werden. Eine besonders wirtschaftliche Möglichkeit für das Auftragen geeigneten Materials besteht darin, dass die Wände des Fluid-Führungssystems und/oder der elastischen Abdichtung im Siebdruckverfahren auf die ebenen Basisplatten aufgebracht wird. Die Herstellung der Verteilerplatten wird dadurch verfahrenstechnisch erheblich vereinfacht. Die nach dem oben beschriebenen Verfahren hergestellten Verteilerplatten sind vielfältig einsetzbar, ihr besonderes Anwendungsgebiet ist jedoch die elektrochemische Brennstoffzelle.

### Ausführung der Erfindung

Anhand eines in der Zeichnung dargestellten Ausführungsbeispiels wird die Erfindung nachstehend näher erläutert.

Es zeigen:
- Fig. 1: Eine Verteilerplatte in der Draufsicht und
- Fig. 2: einen Schnitt durch die Verteilerplatte gemäß der Linie A-A aus der Fig. 1

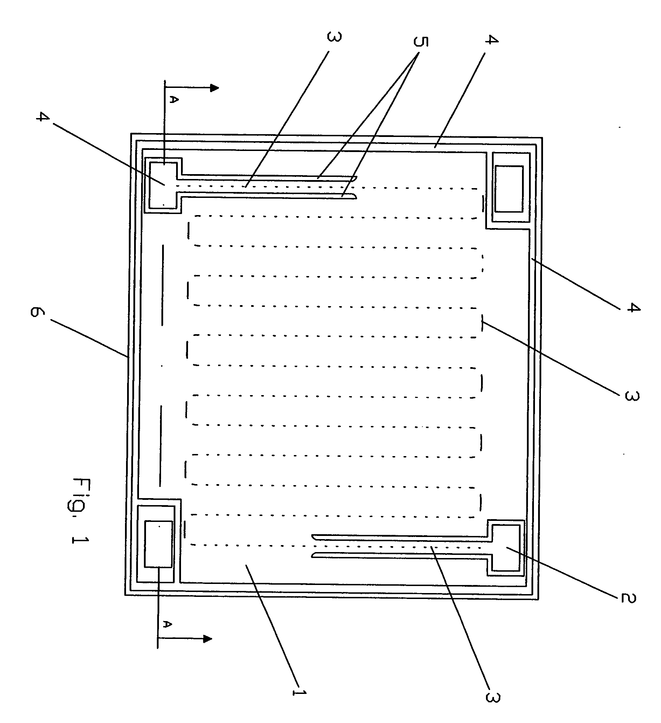

In der Fig 1 ist eine Verteilerplatte 1 in der Draufsicht gezeigt. Die Verteilerplatte 1 ist für eine elektrochemische Brennstoffzelle vorgesehen, bei der eine Vielzahl solcher Verteilerplatten mit Elektrolytmembranen zu einem Paket zusammengefügt werden. Auf der Verteilerplatte 1 sind Verteilerräume 2 vorgesehen, welche über die Kanäle 3 miteinander verbunden sind. Üblicherweise sind die Verteilerplatten 1 mit Verteilerräumen 2 und Kanälen 3 auf beiden Seiten versehen und auf einer Seite wird ein Gas und auf der anderen Seite eine Kühlflüssigkeit durch die Kanäle 3 geleitet. Die Verteilerräume und Kanäle bilden das Fluid-Führungssystem für das entsprechende Reaktions- und/oder Kühlmedium. Das gesamte Fluid-Führungssystem ist von einer rahmenförmigen elastischen Abdichtung 4 umgeben. Die Wände 5 der Verteilerräume 2 und der Kanäle 3 sind durch direktes Auftragen eines geeigneten Materials auf die ebene Basisplatte 6 hergestellt. Dabei wird die unterhalb der Wände 5 und/oder der Abdichtungen 4 liegende Fläche der Basisplatte 6 vor dem Aufbringen des Wand- bzw.

Dichtungsmaterials mit einem Binder beschichtet. Auf diese Weise wird eine besonders sichere Verbindung zwischen den Materialien erreicht. Bei besonderen Materialpaarungen ist es auch möglich, die Wände 5 oder die Abdichtungen 4 mit der Basisplatte 6 durch Adhäsion zu verbinden. In diesem Fall können die Wände 5 bzw. Abdichtungen 4 aus einem Material sein, dass mit dem Binder selbst ausgestattet ist. Die Materialien für die Wände 5 der Kanäle 3 und der Verteilerräume 2 werden in flüssiger Form auf die ebenen Basisplatten 6 aufgetragen und anschließend ausgehärtet. Die Aushärtung erfolgt in der Regel bei erhöhter Temperatur.

Für die Wände 5 wird bevorzugt ein Polymermaterial verwendet, dass elektrisch leitfähig ist. Dieses kann beispielsweise eine elektrisch leitfähige Paste sein, die auf die Basisplatte 6 aufgetragen wird. Eine besonders günstige Ausgestaltung ergibt sich, wenn dass Material für die elastischen Abdichtungen 4 und das Material für die Wände 5 der Kanäle 3 und der Verteilerräume 2 gleich ist. Es können dann in einem Verfahrensschritt sowohl die Wände 5 für das Fluid-Führungssystem als auch die Abdichtung 4 auf die Basisplatte 6 aufgetragen werden.

Für das Auftragen des Materials sowohl für die Wände 5 des Fluid-Führungssystems als auch für die Abdichtung 4 auf die Basisplatte 6 eignet sich in diesem Fall auch das Siebdruckverfahren. Bei Anwendung dieses Verfahrens können eine hohe Genauigkeit der Geometrien der Kanäle 3 und Verteilerräume 2 erzielt werden obwohl es sich hier häufig um geringste Abmessungen handelt.

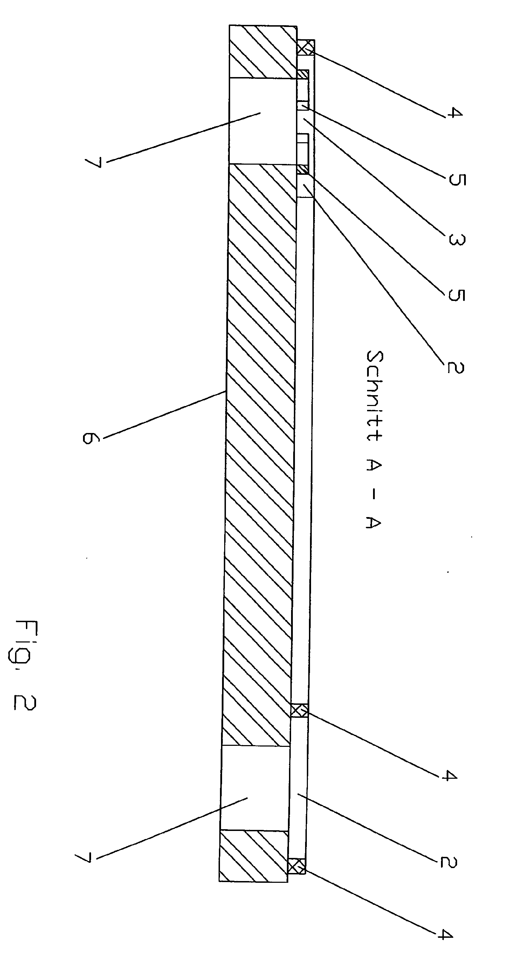

In der Fig. 2 ist im Schnitt die Basisplatte 6 in starker Vergrößerung dargestellt. In diesem Fall ist die Basisplatte 6 lediglich auf ihrer Oberseite mit den Verteilerräumen 2 und den Kanälen 3 versehen. Die Verteilerräume 2 sind mit den Durchbrüchen 7 der Basisplatte 6 verbunden. Im vorliegenden Fall sind die Wände 5 der Verteilerräume 2 bzw. Kanäle 3 geringfügig flacher als die Wände der Abdichtung 4. Letztere sind aus einem elastomeren Material hergestellt. Die Basisplatte 6 besteht aus einem Graphit. Die Aufbringung der Wände 5 und der Abdichtungen 4 auf die Basisplatte 6 wird im Siebdruckverfahren durchgeführt, dass äußerst schonend ist. Eine Zerstörung der aus Graphit bestehenden Basisplatte 6 durch ungewollt hohe Kräfte beim Aufbringen der Wände 5 bzw der Abdichtung 4 wird dabei vermieden. Eine solche Verteilerplatte 1 kann folglich im industriellen Maßstab in Serie gefertigt werden.

## Patentansprüche

1. Verfahren zur Herstellung von Verteilerplatten, insbesondere von Verteilerplatten für elektrochemische Brennstoffzellen mit einem Fluid-Führungssystem aus Verteilerräumen und/oder Kanälen für Reaktionsund/oder Kühlmedien und mit einer rahmenförmigen elastischen Abdichtung, **dadurch gekennzeichnet, dass** die Wände (5) der Verteilerräume (2) und/oder der Kanäle (3) des Fluid-Führungssystems durch direktes Auftragen eines geeigneten Materials auf eine eben ausgebildete Basisplatte (6) aus Graphit, Composit-Graphit, Blech oder Kunststoff-Folie hergestellt sind.

2. Verfahren zur Herstellung von Verteilerplatten nach Anspruch 1, **dadurch gekennzeichnet, dass** die Wände (5) des Fluid-Führungssystems und/oder die Abdichtungen (4) mit der Basisplatte (6) durch Adhäsion verbunden sind.

3. Verfahren zur Herstellung von Verteilerplatten nach Anspruch 1 oder 2, **dadurch gekennzeichnet, dass** die von den Wänden (5) des Fluid-Führungssystems und/oder von der Abdichtung (4) bedeckte Fläche der Basisplatte (6) vor dem Aufbringen des Wand- bzw. Dichtungsmaterials mit einem Binder beschichtet ist oder das Wand- bzw. Dichtungsmaterial einen Binder enthält.

4. Verfahren zur Herstellung von Verteilerplatten nach Anspruch 1 bis 3, **dadurch gekennzeichnet, dass** die Materialien für die Wände (5) der Verteilerräume (2) und/oder der Kanäle (3) in flüssiger Form auf die ebene Basisplatte (6) aufgetragen und anschließend ausgehärtet werden.

5. Verfahren zur Herstellung von Verteilerplatten nach einem der Ansprüche 1 bis 4, **dadurch gekennzeichnet, dass** das Polymermaterial vor dem Auftragen in Form einer elektrisch leitfähigen Paste vorliegt.

6. Verfahren zur Herstellung von Verteilerplatten nach einem der Ansprüche 1 bis 5, **dadurch gekennzeichnet, dass** die elastische Abdichtung (4) aus dem gleichen Material wie das Material für die Wände (5) der Verteilerräume (2) und Kanäle (3) hergestellt ist.

7. Verfahren zur Herstellung von Verteilerplatten nach einem der Ansprüche 1 bis 6, **dadurch gekennzeichnet, dass** die Wände (5) des Fluid-Führungssystems und/oder die elastische Abdichtung (4) im Siebdruckverfahren auf die ebene Basisplatte (6) aufgebracht sind.

8. Verteilerplatten hergestellt nach dem Verfahren der Ansprüche 1 bis 6

9. Verteilerplatte nach Anspruch 8, **dadurch gekennzeichnet, dass** die Kunststoff-Folie elektrisch leitend ist.
